# FASCICULE DE BREVET EUROPEEN

(11) **EP 2 042 427 B1**
(45) Date de publication et mention de la délivrance du brevet: **21.04.2010**
(21) Numéro de dépôt: 08015889.2
(22) Date de dépôt: 10.09.2008
(51) Int. Cl.: B64C 1/24

(54) **Marchepied repliable d'un véhicule et véhicule muni d'un tel marchepied**
Einklappbares Trittbrett eines Fahrzeugs und mit einem solchen Trittbrett ausgestattetes Fahrzeug
Retractable step for a vehicle and vehicle equipped with such a step

(30) Priorité: 26.09.2007 FR 0706754
(43) Date de publication de la demande: 01.04.2009
(73) Titulaire: EUROCOPTER, 13725 Marignane Cédex (FR)
(72) Inventeur: Martin, Eric André, 83910 Pourrieres (FR)
(74) Mandataire: GPI & Associés

(56) Documents cités:
- DE-B- 1 027 085
- JP-A- 4 339 041
- SU-A1- 403 594
- US-A- 2 294 000
- US-A- 3 528 574

## Description

La présente invention concerne un marchepied repliable, permettant à un utilisateur de monter ou de descendre d'un véhicule tel qu'un giravion, et par suite un véhicule muni d'un marchepied selon l'invention.

Généralement, des marchepieds sont agencés sur des véhicules pour qu'un utilisateur puisse aisément entrer ou sortir de ce véhicule. Les marchepieds sont plus particulièrement utiles pour les véhicules ayant une garde au sol importante, les giravions par exemple.

On connaît par le document GB 15077 un premier marchepied partiellement repliable.

Ce premier marchepied comporte un bloc principal, muni d'une pluralité de marches, sur lequel sont articulées une première et une deuxième marches inférieures.

Une tige est alors solidarisée sur la face inférieure de la deuxième marche inférieure. En utilisant un levier, un utilisateur déplace alors la tige de manière à replier les première et deuxième marches inférieures sous le bloc principal.

Ainsi, ce premier marchepied est partiellement repliable, les première et deuxième marches inférieures étant rangées sous le bloc principal. Par contre, ce bloc principal n'est ni replié ni escamoté.

Par suite, il est impossible de rentrer le marchepied dans un logement.

Or, sur les giravions, les marchepieds sont de préférence agencés dans l'espace inférieur du fuselage dénommé « barque » par l'homme du métier La barque a alors une forme arrondie à ces extrémités, l'homme du métier appelant ces extrémités « quart de coque ».

Afin de ne pas dégrader les capacités aérodynamiques du giravion, le marchepied est entièrement contenu dans un logement situé dans la barque durant le vol. Ce logement est généralement en grande partie aménagé dans la barque, mais peut éventuellement saillir légèrement de cette dernière du fait de la présence de câbles ou de tuyauteries par exemple.

Au sol, le marchepied sera par contre déployé et sortira de son logement.

Par conséquent, le premier marchepied du document GB 15077 n'est pas adapté pour les giravions dans la mesure où le bloc principal ne peut pas être replié, voire même escamoté.

A contrario, on connaît par le document US 5584493 un deuxième marchepied comportant un unique bloc muni d'une pluralité de marches.

Ce bloc étant escamotable, il peut être sorti ou rentré dans un logement à l'aide d'un système commandé par un fluide pressurisé.

Toutefois, ce marchepied est relativement encombrant dans la mesure où il est seulement escamotable. En effet, le bloc muni de marches n'étant pas repliable, il devient impossible de réduire son encombrement pour le rentrer dans un logement exigu.

Bien qu'efficace, le deuxième marchepied décrit par le document US 5584493 ne pourra alors pas être agencé sur un giravion de par ses dimensions, l'espace disponible dans le « quart de coque » de la barque d'un giravion étant malheureusement restreint du fait de ses spécificités.

Enfin, le document EP 0884218 présente un troisième marchepied.

Ce troisième marchepied comporte une unique marche repliable, cette marche passant d'une position active sortie à une position inactive rentrée en fonction du déplacement d'une porte du véhicule équipé du troisième marchepied.

Ce troisième marchepied est alors spécifiquement dédié à une application automobile.

En effet, le troisième marchepied comporte une unique marche ce qui pourrait s'avérer insuffisant pour un véhicule possédant une garde au sol relativement importante.

De plus, on constate que la marche reste à l'extérieur du véhicule quelle que soit sa position.

Une telle configuration semble inappropriée pour une application aéronautique. On comprend bien que les efforts exercés par l'air sur la marche seraient alors de nature à détériorer le marchepied en provoquant par exemple un déploiement intempestif de la marche.

On connaît des autres exemples par les documents US 2294000 et DE 1027085.

La présente invention a pour objet de proposer un marchepied qui puisse être contenu et maintenu dans un logement ménagé dans le fuselage d'un giravion.

Selon l'invention, un marchepied repliable d'un véhicule, tel qu'un giravion, est muni d'une marche inférieure et d'un support fixe qui est solidarisé à la structure du véhicule, la structure d'un giravion ou par exemple d'un véhicule terrestre du type train, voiture, autobus ou encore camion notamment.

Ce marchepied comporte une seule poutre latérale gauche et une seule poutre latérale droite articulées sur le support fixe, la marche inférieure étant agencée sur une extrémité libre gauche et une extrémité libre droite respectivement des poutres latérales gauche et droite via un axe de rotation, matérialisé par une vis par exemple. De plus, un moyen d'entraînement du marchepied lié par au moins un moyen de commande à au moins une poutre latérale permet de rentrer et de sortir le marchepied d'un logement ménagé dans le véhicule. Ce marchepied est remarquable en ce qu'il comporte une marche supérieure selon la partie caractérisante.

Par conséquent, le marchepied est entièrement repliable et peut donc être contenu dans un espace restreint tel qu'un logement situé dans la barque d'un giravion.

Ainsi, le moyen d'entraînement permet de faire passer la marche inférieure du marchepied d'une position dénommée « position fermée » par la suite, où la marche inférieure est inactive puisque le marchepied est replié dans un logement prévu à cet effet, à une position dénommée « position ouverte » par la suite, où la marche inférieure est active pour aider un utilisateur lorsque le marchepied est sorti dudit logement.

De plus, ledit au moins un moyen de commande est pourvu d'un moyen de commande gauche et d'un moyen de commande droit, le moyen de commande gauche étant articulé sur le support fixe et la poutre latérale gauche alors que le moyen de commande droit est articulé sur le support fixe et la poutre latérale droite.

De même, le support fixe est muni d'une branche gauche et d'une branche droite sur lesquelles sont respectivement articulées les poutres latérales gauche et droite.

Sous l'impulsion du moyen d'entraînement, les moyens de commande gauche et droit tirent ou poussent les poutres latérales qui effectuent un mouvement rotatif autour de leur point de liaison aux branches du support fixe, Ce mouvement rotatif permet de faire passer le marchepied d'une position ouverte à une position fermée, et inversement.

De plus, on verra par la suite que le moyen d'entraînement et ledit au moins un moyen de commande verrouillent le marchepied dans la position voulue, ouverte ou fermée, afin d'éviter tous risques de fermeture ou d'ouverture intempestive.

Par ailleurs, le marchepied comporte de préférence au moins une tige articulée d'une part sur la marche inférieure et d'autre part sur une portion supérieure du support fixe.

Par exemple, le marchepied est muni d'une tige droite et d'une tige gauche selon le mode de réalisation préféré.

Chaque tige est articulée sur un déport de la marche inférieure, ce déport étant en amont d'un axe de rotation de la marche inférieure, un utilisateur posant son pied en aval de cet axe de rotation en montant dans le véhicule, dans un giravion par exempte.

Les tiges contrôlent alors l'inclinaison de la marche inférieure par rapport aux poutres latérales.

En position fermée, cette inclinaison est faible, voire nulle, de manière à réduire l'encombrement du marchepied, alors qu'en position ouverte cette Inclinaison est optimisée pour améliorer le confort de l'utilisateur.

Au moins une poutre latérale peut d'ailleurs être pourvue d'une première butée pour bloquer la marche inférieure selon un angle prédéterminé lorsque le marchepied est déplié, à savoir en position ouverte. De préférence, le marchepied est pourvu d'une première butée droite sur la poutre latérale droite et d'une première butée gauche sur la poutre latérale gauche.

Cet angle prédéterminé correspond à l'angulation devant séparer la marche inférieure des poutres latérales afin que la marche inférieure soit sensiblement horizontale, la position horizontale étant perpendiculaire à un axe vertical dirigé selon la pesanteur.

Plus précisément, la marche inférieure comporte un déport en forme de T inversé qui coopère avec la première butée pour bloquer la marche inférieure selon l'angle prédéterminé souhaité.

Par ailleurs, le marchepied peut comporter une marche supérieure, une partie arrière de cette marche supérieure étant fixée sur le support fixe, via un axe de liaison, alors qu'une partie avant de la marche supérieure est agencée contre les poutres latérales gauche et droite.

La marche supérieure est alors éventuellement pourvue d'une rainure latérale gauche et d'une rainure latérale droite qui coopèrent respectivement avec un pion d'ancrage gauche solidarisé à la poutre latérale gauche et un pion d'ancrage droit solidarisé à la poutre latérale droite.

En outre, afin que le moyen d'entraînement puisse entrainer le moyen de commande pour rentrer ou sortir le marchepied de son logement, ce moyen d'entraînement comporte un arbre primaire de sortie qui met en rotation, via un lien, au moins un arbre secondaire solidarisé à au moins un moyen de commande.

On note que le moyen d'entraînement peut éventuellement être un moteur électrique débrayable, ou un moyen d'entraînement manuel, apte à entrainer en rotation son arbre primaire de sortie autour de son axe primaire longitudinale de symétrie.

Selon un premier mode de réalisation préféré, le marchepied comporte un unique arbre secondaire qui traverse le support fixe tout en restant apte à effectuer un mouvement rotatif autour de son axe secondaire longitudinal de symétrie, Le moyen de commande gauche est par suite articulé sur la branche gauche du support fixe en étant solidarisé sur une extrémité de fixation gauche de cet arbre secondaire, alors que le moyen de commande droit est lui articulé sur la branche droite du support fixe en étant solidarisé sur une extrémité de fixation droite de l'arbre secondaire.

Un lien sans fin, tel qu'une courroie, relie alors l'arbre primaire du marchepied à son arbre secondaire.

Par suite, le moyen d'entraînement est lié aux poutres latérales successivement par son arbre primaire, un lien, un arbre secondaire et au moins un moyen de commande, à savoir éventuellement un moyen de commande gauche et un moyen de commande droit.

Le moyen d'entraînement fait alors tourner l'arbre primaire dans le sens senestrorsum ou dextrorsum, suivant le besoin, qui met à son tour en rotation l'arbre secondaire à l'aide dudit lien, un lien sans fin tel qu'une courroie par exemple. Cet arbre secondaire répercute son mouvement sur les moyens de commande qui poussent ou tirent les poutres latérales pour rentrer ou sortir le marchepied.

A contrario, selon un deuxième mode de réalisation, le marchepied comporte un arbre secondaire qui est scindé en deux parties distinctes, plus précisément un arbre secondaire gauche et un arbre secondaire droit, chaque arbre secondaire étant agencé sur le support fixe en restant apte à effectuer un mouvement rotatif autour de son axe secondaire longitudinal de symétrie. Le moyen de commande gauche est par suite articulé sur le support fixe en étant solidarisé à l'arbre secondaire gauche, alors que le moyen de commande droit est lui articulé sur le support fixe en étant solidarisé à l'arbre secondaire droit.

L'arbre primaire traverse alors le moyen d'entraînement de part en part, un lien, un lien sans fin tel qu'une courroie par exemple, reliant la zone extrémale gauche de l'arbre primaire du marchepied à l'arbre secondaire gauche alors qu'un autre lien relie la zone extrémale droite de l'arbre primaire du marchepied à l'arbre secondaire droit.

Par suite, le moyen d'entraînement est lié aux poutres latérales successivement par son arbre primaire, des liens, des arbres secondaires gauche et droit ainsi qu'un moyen de commande gauche et un moyen de commande droit.

Le moyen d'entrainement fait alors tourner l'arbre primaire dans le sens senestrorsum ou dextrorsum, suivant le besoin, qui met à son tour en rotation les arbres secondaires gauche et droit. Ces arbres secondaires gauche et droit répercutent leur mouvement sur les moyens de commande qui poussent ou tirent les poutres latérales pour rentrer ou sortir le marchepied.

On note qu'il est envisageable de prévoir deux moyens d'entraînement munis chacun d'un arbre primaire, chaque moyen d'entraînement entrainant en rotation un arbre secondaire.

A titre de variante de ces modes de réalisation, les liens sans fin peuvent être remplacés par des pignons, un arbre principal comportant des pignons principaux qui entrainent des pignons secondaires solidarisés à un arbre secondaire.

En outre, chaque moyen de commande comporte un levier et une bielle, le levier étant articulé sur le support fixe du marchepied et sur la bielle du moyen de commande, cette bielle étant donc articulée sur le levier et sur une poutre latérale.

De plus, le levier est solidarisé à un arbre secondaire afin de pouvoir effectuer un mouvement rotatif autour de l'axe secondaire longitudinal de symétrie dudit arbre secondaire.

Par ailleurs, la bielle comporte avantageusement une partie mobile qui coulisse sur une partie fixe de cette bielle, la partie mobile étant solidarisée à une poutre latérale alors que la partie fixe est articulée sur le levier du moyen de commande.

La partie mobile a alors une forme de C, cette partie fixe entourant ledit arbre secondaire en position fermée.

Cette caractéristique particulière de la bielle est particulièrement intéressante puisqu'elle permettra au moyen de commande d'être verrouillé en position ouverte ou fermée.

Enfin, le marchepied peut être équipé de deuxième et troisième butées pour contrôler le déplacement de certains de ces éléments.

Le support fixe est alors pourvu d'au moins une deuxième butée pour bloquer une poutre latérale lorsque le marchepied est replié.

Quel que soit le mode de réalisation, la branche gauche du support fixe possède une deuxième butée gauche servant de butée d'arrêt à la poutre latérale gauche alors que la branche droite du support fixe possède une deuxième butée droite servant de butée d'arrêt à la poutre latérale droite.

De même, le support fixe comporte au moins une troisième butée pour bloquer un moyen de commande, et notamment son levier, lorsque le marchepied est déplié en position ouverte.

Par suite, la branche gauche du support fixe possède une troisième butée gauche servant de butée d'arrêt au levier gauche du moyen de commande gauche, la branche droite du support fixe possédant une troisième butée droite servant de butée d'arrêt au levier droit du moyen de commande droit.

En effet, le levier de chaque moyen de commande étant solidarisé à un arbre secondaire afin de pouvoir effectuer un mouvement rotatif autour de l'axe secondaire longitudinal de symétrie de cet arbre secondaire, le marchepied est muni d'un ressort de rappel agencé sur l'arbre secondaire afin de maintenir le moyen de commande en contact avec la deuxième butée quand le marchepied est déplié en positon ouverte.

Le ressort de rappel tend alors à verrouiller le moyen de commande en position ouverte.

La présente invention a de plus pour objet un véhicule muni d'une barque dans la zone inférieure de sa structure, un giravion muni d'une barque dans la zone inférieure de son fuselage par exemple. Ce véhicule comporte alors un marchepied selon l'invention contenu entièrement dans un logement aménagé au mieux dans ladite barque lorsque ce marchepied est replié en position fermée.

Ce logement étant obturé en vol par un capot inférieur pour des raisons aérodynamiques, le capot inférieur est mis en mouvement au sol par au moins un premier bras déplacé par une came excentrique afin de permettre le dépliage du marchepied, la came étant mise en rotation par un arbre secondaire du marchepied entraîné en rotation par un moyen d'entraînement.

Avantageusement, le marchepied comporte un premier bras gauche et un premier bras droit fixés sur au moins un arbre secondaire, cet arbre secondaire étant mis en mouvement par le moyen d'entraînement, Selon le premier mode de réalisation, les premier bras gauche et droit sont respectivement fixés sur les extrémités de fixation gauche et droite d'un arbre secondaire unique, via une came excentrique, alors que, selon le deuxième mode de réalisation, les premier bras gauche et droit sont respectivement fixés sur un arbre secondaire gauche et un arbre secondaire droit, via une came excentrique.

Par suite, le moyen d'entraînement permet à la fois de déployer le marchepied mais aussi d'ouvrir le capot inférieur.

En effet, en étant entraînés par le moyen d'entraînement, le ou les arbres secondaires agissent sur les premiers bras, via les cames, pour ouvrir le capot inférieur.

Une fois cette opération préliminaire achevée, ces arbres secondaires poursuivent leur mouvement rotatif. Ils induisent alors une rotation des poutres latérales de manière à déployer la marche inférieure, et le cas échéant la marche supérieure du marchepied.

De même, le logement étant obturé en vol par un capot supérieur, le capot supérieur est mis en mouvement au sol par au moins un deuxième bras articulé sur une marche supérieure du marchepied, le déploiement de la marche supérieure entraînant un déplacement du capot supérieur.

Avantageusement, le marchepied comporte un deuxième bras gauche et un deuxième bras droit solidarisés chacun à la marche supérieure.

Le déploiement de la marche supérieure, pour passer d'une position fermée à une position ouverte a alors pour conséquence la rétraction du capot supérieur.

L'invention et ses avantages apparaîtront avec plus de détails dans le cadre de la description qui suit avec des exemples de réalisation donnés à titre illustratif en référence aux figures annexées qui représentent :
- la figure 1, une vue schématique d'un giravion pourvu d'un marchepied,
- la figure 2, une vue isométrique d'un marchepied selon un premier mode de réalisation en position ouverte,
- la figure 3, une vue isométrique d'un marchepied selon un premier mode de réalisation dans une position intermédiaire,
- la figure 4, une vue isométrique d'un marchepied selon un premier mode de réalisation en position fermée,
- la figure 5, une vue schématique montrant un moyen de commande du marchepied selon un premier mode de réalisation en position ouverte,
- la figure 6, une vue schématique montrant un moyen de commande du marchepied selon un premier mode de réalisation en position fermée, et
- la figure 7, une vue schématique d'un arbre secondaire selon un deuxième mode de réalisation.

Les éléments présents dans plusieurs figures distinctes sont affectés d'une seule et même référence.

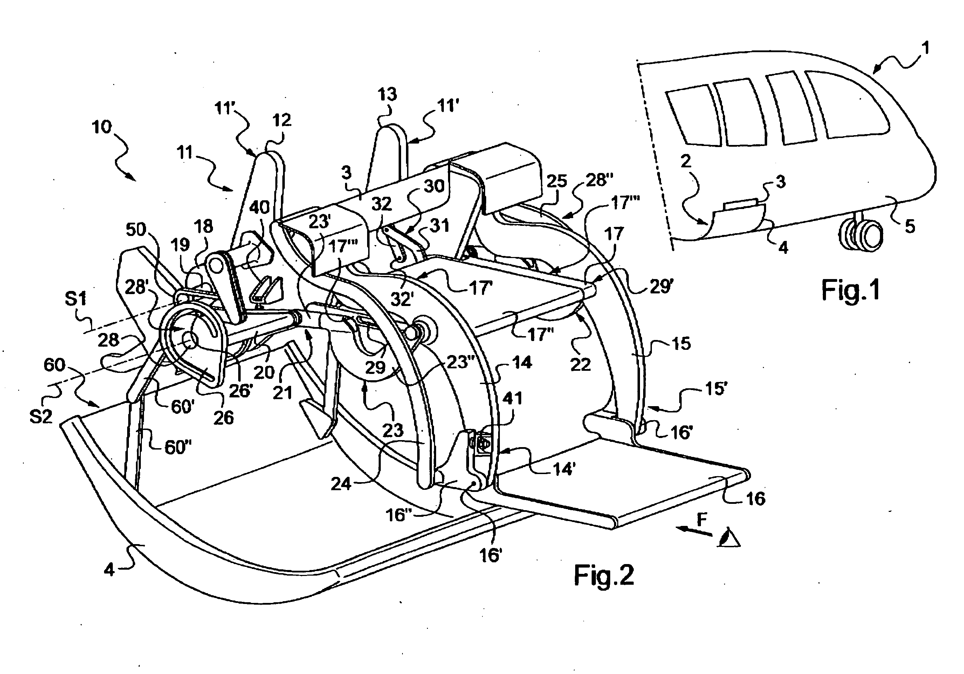

La figure 1 présente donc une vue schématique d'un giravion 1 muni d'un marchepied selon l'invention, le marchepied étant agencé à l'intérieur d'un logement 2 ménagé dans la barque 5 du giravion 1.

Conformément à la figure 1, ce logement 2 peut être fermé à l'aide d'un capot inférieur 4 et d'un capot supérieur 3 afin de ne pas générer de perturbations aérodynamiques en vol. Le marchepied est alors en position fermée en étant replié pour être entièrement contenu dans le logement 2.

A contrario, au sol, le marchepied peut ouvrir les capots inférieur 4 et supérieur 3 afin de se déplier pour passer en position ouverte.

Un utilisateur pourra alors monter ou descendre facilement du giravion en empruntant le marchepied.

Les figures 2 à 4 présentent un marchepied 10 repliable selon un premier mode de réalisation respectivement en position ouverte, dans une position intermédiaire et en position fermée.

En référence à la figure 2, le marchepied 10 est muni d'un support 11 comportant une branche gauche 12 et une branche droite 13 solidarisées à la structure du giravion, à l'intérieur du logement 2 prévu à cet effet.

De plus, le marchepied 10 est pourvu d'une poutre latérale gauche 14 et d'une poutre latérale droite 15 respectivement articulées sur les branches gauche 12 et droite 13 du support fixe 11. Chaque poutre latérale 14, 15 est ainsi apte à effectuer un mouvement rotatif autour de l'articulation la reliant à une branche 12, 13 du support fixe 11.

Une marche inférieure 16 du marchepied est alors agencée entre les poutres latérales gauche 14 et droite 15. Plus précisément, la marche inférieure 16 est disposée entre les poutres latérales gauche 14 et droite 15 en étant fixée d'une part à une extrémité libre gauche 14' de la poutre latérale gauche 14 par un axe de rotation 16', et d'autre part, à une extrémité libre droite 15' de la poutre latérale gauche 15 par un autre axe de rotation 16'. Lorsqu'un observateur regarde le marchepied suivant la flèche F, la poutre latérale gauche 14 est alors située à gauche de la marche inférieure 16, la poutre latérale droite 15 étant située à droite de la marche inférieure 16. Les termes « gauche », « droite » et « droit » se référent ainsi dans la suite du texte à la position des éléments concernés vis-à-vis de la marche inférieure 16.

La marche inférieure 16 est ensuite à même de réaliser un mouvement rotatif autour de ces axes de rotation 16', des vis de fixation par exemple.

Toutefois, la marche inférieure 16 comporte deux déports 16", en forme de T inversé, situé en amont de chaque axe de rotation 16'. Lorsque le marchepied est en position ouverte, chaque déport 16" coopère alors avec une première butée 41 de chaque poutre latérale 14, 15 pour bloquer la marche inférieure 16 à un angle prédéterminé par rapport aux poutres latérales 14, 15.

De préférence, cet angle prédéterminé permet à la marche inférieure 16 d'être en position horizontale, c'est-à-dire dans un plan perpendiculaire à la pesanteur. Par conséquent, si un utilisateur pose son pied sur la marche inférieure 16, nécessairement en aval des axes de rotations 16', cette marche inférieure 16 conservera ledit angle prédéterminé avec les poutres latérales du fait de la coopération de chaque déport 16" avec chaque première butée 41.

En outre, le marchepied 10 comporte deux tiges 24, 25 articulées de part et d'autre de la marche inférieure 16 sur les déports 16".

Ainsi, une tige 24 gauche est articulée sur un déport 16" ainsi que sur la portion supérieure 11' de la branche gauche 12 du support fixe 11, De même, la tige 25 droite est articulée sur un déport 16" de la marche inférieure 16 ainsi que sur la portion supérieure 11' de la branche droite 13 du support fixe 11.

Le marchepied 10 est alors équipé d'une marche supérieure 17 dont une partie arrière 17' est fixée sur les branches gauche 12 et droite 13 du support via des axes de liaison. La partie arrière 17' de la marche supérieure est donc agencée entre les branches gauche 12 et droite 13, tout en pouvant réaliser un mouvement rotatif autour des axes de liaison lors du dépliage/repliage du marchepied 10.

A contrario, la partie avant 17" de la marche supérieure 17 est agencée entre les poutres latérales gauche 14 et droite 15.

Plus précisément, les faces latérales 17''' de la marche supérieure 17 sont rainurées, cette marche supérieure possédant ainsi une rainure latérale gauche 29 et une rainure latérale droite 29'.

Or, la poutre latérale gauche 14 et la poutre latérale droite 15 comportent chacune un pion d'ancrage. Le pion d'ancrage de la poutre latérale gauche 14 est donc disposé dans la rainure gauche 29 alors que le pion d'ancrage de la poutre latérale droite 15 est disposé dans la rainure droite 29'.

Par ailleurs, afin de pouvoir passer d'une position ouverte à une position fermée, et inversement, le marchepied 10 comporte un moyen d'entraînement 18, un moteur électrique par exemple, lié par au moins un moyen de commande 21, 22 aux poutres latérales. Le moyen d'entraînement 18 permet alors de faire tourner les poutres latérales 14, 15, via ledit au moins un moyen de commande 21, 22, autour de leur articulation au support fixe 11 pour faire entrer ou sortir les marches inférieure 16 et supérieure 17 du logement 2 du giravion 1.

Ledit au moins un moyen de commande est alors pourvu d'un moyen de commande gauche 21 articulé, via l'extrémité de fixation gauche 28' d'un arbre secondaire 28, sur la branche gauche 12 du support fixe 11 et sur la poutre latérale gauche 14.

De même, ledit au moins un moyen de commande est pourvu d'un moyen de commande droit 22 articulé sur la branche droite 13 du support fixe 11, via l'extrémité de fixation droite 28" de l'arbre secondaire 28, et sur la poutre latérale droite 15.

Le moyen d'entraînement 18 est alors apte à entraîner en rotation un arbre primaire 19 de sortie autour de son axe primaire longitudinal de symétrie S1.

De plus, cet arbre primaire 19 induit à son tour un mouvement des moyens de commande gauche 21 et droit 22. En effet, l' arbre primaire 19 est liée à l'extrémité de fixation gauche 28' de l'arbre secondaire 28 par un lien, une courroie 50, et entraine ainsi cet arbre secondaire 28 en rotation autour de son axe longitudinal de symétrie S2. Les moyens de commande gauche 21 et droit 22 étant solidarisés aux extrémités de fixations gauche 28' et droite 28" de l'arbre secondaire, ces moyens de commande gauche 21 et droit 22 sont donc naturellement mis en mouvement par l'arbre primaire 19 via l'arbre secondaire 28.

Par conséquent, lorsque le moyen d'entraînement 18 tourne dans le sens dextrorsum, il induit une rotation identique de l' arbre primaire 19.

Cet arbre primaire 19 entraîne alors en rotation dans le sens dextrorsum les moyens de commande gauche 21 et droit 22. Les poutres latérales gauche 14 et droite 15 tournent donc elles aussi dans ce sens dextrorsum ce qui permet de replier le marchepied pour le faire passer d'une position ouverte à une position fermée.

On comprend que pour déplier le marchepied 10 et le faire passer dans une position ouverte, le moyen d'entraînement tourne au contraire dans le sens senestrorsum.

En outre, pour remplir sa fonction, chaque moyen de commande 21, 22 comporte un levier 20 et une bielle 23.

Le moyen de commande gauche 21 possède ainsi un levier 20 gauche qui est d'une part solidarisé sur l'extrémité de fixation gauche 28' de l'arbre secondaire 28, et, d'autre part articulé à une bielle 23 gauche. Cette bielle 23 gauche est donc articulée sur le levier 20 gauche, mais aussi sur la poutre latérale gauche 14.

De même, le moyen de commande droit 22 possède ainsi un levier 20 droit qui est d'une part solidarisé sur l'extrémité de fixation droite 28" de l'arbre secondaire 28, et, d'autre part articulé à une bielle 23 droite, Cette bielle 23 droite est donc articulée sur le levier 20 droit, mais aussi sur la poutre latérale droite 15.

Afin de pouvoir réaliser les mouvements requis, et pour participer à la stabilisation du marchepied 10, chaque bielle 23 comporte une partie fixe 23' et une partie mobile 23" qui est apte à coulisser sur la partie fixe 23'.

La partie fixe 23' est alors articulée sur le levier du moyen de commande alors que la partie mobile 23", en forme de C, est solidarisée à une poutre latérale.

On verra par la suite que la partie mobile 23" en forme de C de la bielle 23 entoure avantageusement l' arbre secondaire 28 correspondant en position fermée.

En outre, le marchepied 10 est de plus apte à ouvrir les capots inférieur 4 et supérieur 3 préalablement à son déploiement. A l'inverse, lorsque le marchepied 10 est replié à l'intérieur du logement 2, ce marchepied 10 ferme les capots inférieur 4 et supérieur 3.

Par conséquent, le marchepied comporte une came 26 droite agencée sur l'extrémité de fixation droite 28" de l'arbre secondaire 28 fixée sur la branche droite 13 du support fixe 11, cette came 26 droite étant reliée au capot inférieur via un premier bras 60 droit pourvu d'un premier bras primaire 60' droit et d'un premier bras secondaire 60" droit.

De même, le marchepied possède une came 26 gauche agencée sur l'extrémité de fixation gauche 28' de l'arbre secondaire 28 fixée sur la branche gauche 12 du support fixe 11, cette came 26 gauche étant reliée au capot inférieur via un premier bras 60 gauche pourvu d'un premier bras primaire 60' gauche et d'un premier bras secondaire 60" gauche.

En ce qui concerne le capot supérieur 3, disposé entre les branches gauche 12 et droite 13, le marchepied 10 est pourvu d'un deuxième bras 30 articulé sur la marche supérieure 17, une rotation de cette marche supérieure 17 entraînant un déplacement du capot supérieur 3.

En référence à la figure 2, le marchepied 10 est en position ouverte, les marches inférieure 16 et supérieure 17 étant déployées et sorties du logement 2 du giravion 1.

En vol, il convient de ranger le marchepied 10 dans le logement 2 pour que ce marchepied 10 ne génère pas de perturbations aérodynamiques.

Le moyen d'entraînement 18, commandé par le pilote du giravion par exemple, tourne alors dans le sens dextrorsum et répercute son mouvement à l' arbre primaire 19.

L' arbre primaire 19 met alors en rotation via la courroie 50 l'arbre secondaire 28, cet arbre secondaire 28 traversant de part en part le support fixe 11 de manière à ce que ses extrémités de fixation gauche 28' et droite 28" saillent respectivement des branches gauche 12 et droite 13 de ce support fixe 11,

Chaque extrémité de fixation 28', 28" de l'arbre secondaire 28 étant solidarisée à un levier 20 d'un moyen de commande 21, 22 ainsi qu'à une came 26, ces leviers 20 et ces cames 26 sont mis en rotation autour de l'axe secondaire longitudinal de symétrie S2 de l'arbre secondaire 28.

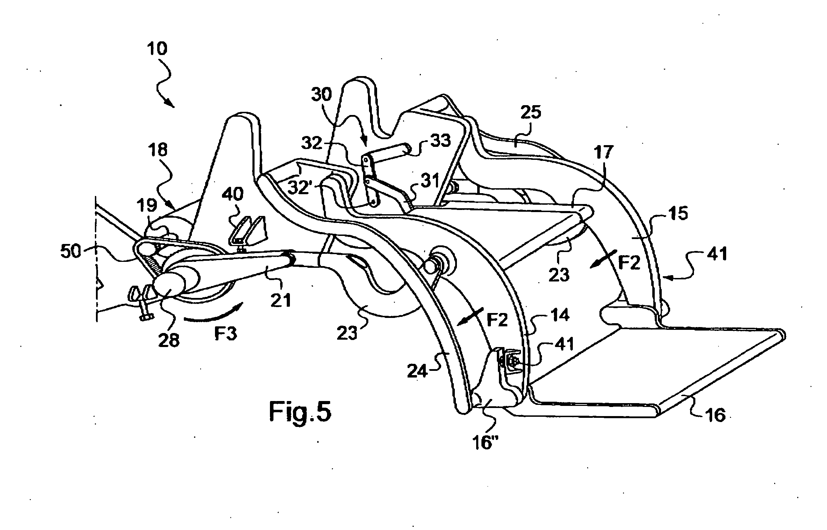

Conformément à la figure 5, chaque levier 21 entraîne un déplacement de la bielle 23 de son moyen de commande ce qui génère une rotation des poutres latérales 14, 15.

Ces poutres latérales 14, 15 se replient alors dans le logement 2.

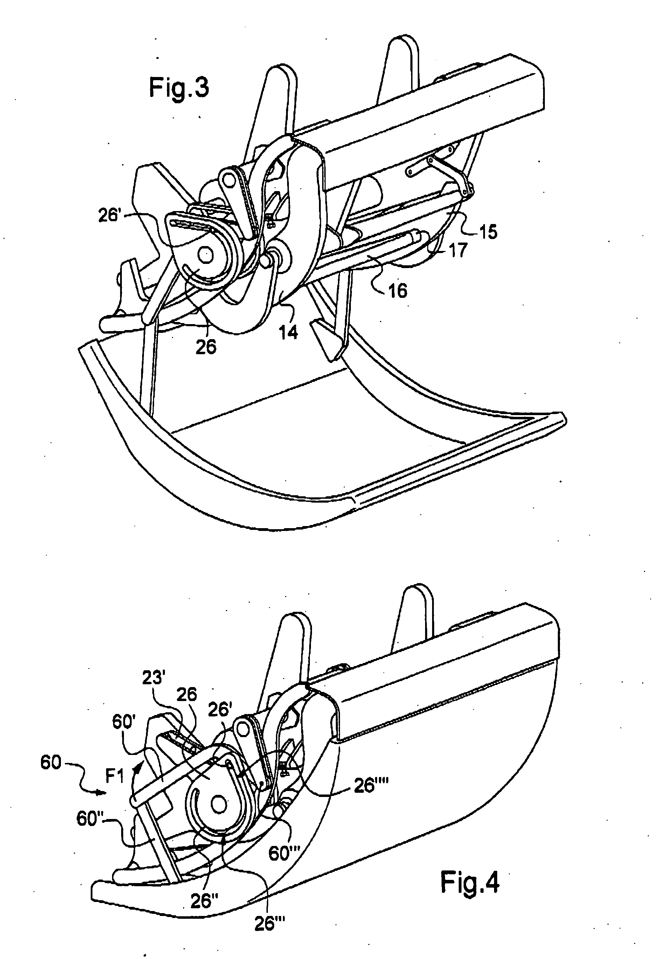

En outre, la marche inférieure 16 étant fixée par ses déports 16" à des tiges 24, 25 articulées sur le support fixe 11, cette marche inférieure 16 tourne autour de ses axes de rotation 16'. Dans la position intermédiaire représentée sur la figure 3, la marche inférieure 16 est totalement repliée et ne saille pas des poutres latérales 14, 15 ce qui minimise l'encombrement du marchepied 10 replié.

De même, les pions d'ancrage des poutres latérales 14, 15 coulissent dans les rainures latérales 29, 29' de la marche supérieure 17. Cette marche supérieure 17 bascule à son tour autour de ses axes de liaison pour ne pas saillir des poutres latérales 14, 15 en position intermédiaire, et plus globalement en position fermée.

De plus, le mouvement de la marche supérieure 17 induit un déplacement du capot supérieur 3, via un deuxième bras.

Plus précisément, ce deuxième bras comporte un deuxième bras primaire 31 solidarisé à la marche supérieure 17, un deuxième bras secondaire 32 et un deuxième bras tertiaire 33 visibles sur la figure 5.

Sous l'impulsion de la marche supérieure 17, le deuxième bras primaire se déplace. Or, ce deuxième bras 31 est articulé sur un deuxième bras secondaire solidarisé d'une part au support fixe 11 par un moyen de fixation 32' et, articulé d'autre part sur un deuxième bras tertiaire.

Par suite, le deuxième bras secondaire tourne autour de son moyen de fixation 32' et pousse le deuxième bras tertiaire 33.

Ce deuxième bras tertiaire 33 étant solidarisé au capot supérieur 3, agencé entre les poutres latérales 14, 15, le capot supérieur 3 est à son tour poussé par le deuxième bras tertiaire 33 et obture partiellement le logement 2.

Avantageusement, le marchepied 10 comporte deux deuxièmes bras 30 pour faciliter la manipulation du capot supérieure 3 et éviter tout risque de blocage.

Sur la position intermédiaire représentée sur la figure 3, les poutres latérales 14, 15 ainsi que les marches Inférieure 16 et supérieure 17 sont repliées, et d'ores et déjà en position fermée.

Par contre, on constate que le mouvement rotatif des cames 26 n'a pour l'instant pas eu d'incidences sur le capot inférieur 4.

Toutefois, le mouvement rotatif du moyen d'entraînement 18 et donc de l'arbre secondaire 28 est poursuivi et ne s'arrête pas une fois la position intermédiaire atteinte.

En référence à la figure 4, il est à noter que la came 26 comporte une fente dans laquelle un doigt 26' est apte à coulisser, ce doigt 26' étant solidaire du premier bras 60.

Plus précisément, le premier bras 60 comportant un premier bras primaire 60' coudé et un premier bras secondaire 60", le doigt 26' est fixé au premier bras primaire 60' au niveau de son coude.

Lors de la rotation de la came 26, le doigt 26' coulisse dans la fente 26" de la came 26. Cette fente étant constituée d'une partie en arc de cercle 26''' prolongée par une partie rectiligne 26'''', lorsque le doigt 26' passe de la partie en arc de cercle à la partie rectiligne, la came 26 exerce un effort sur ce doigt 26'. Le coude du premier bras primaire 60' étant articulé sur un moyen de soutènement 60"' fixé sur le support fixe 11, le premier bras primaire 60' se déplace alors selon la flèche F1 autour de l'articulation du moyen de soutènement 60''', ce déplacement étant provoqué par l'effort exercé par la came 26 sur le doigt 26',

Par suite, le premier bras primaire 60' entraîne dans son mouvement le premier bras secondaire 60" et donc le capot inférieur 4 qui bascule autour de points de fixation à la barque du giravion, non représentés sur les figures, pour passer en position fermée.

On comprend donc que lorsque le doigt 26' s'éloigne de la partie en arc de cercle de la fente de la came 26 alors cette came 26 entraine la fermeture du capot inférieur 4. A contrario, lorsque le doigt 26' coulisse dans la partie rectiligne de la fente de la came en se rapprochant de sa partie en arc de cercle, la came 26 induit l'ouverture du capot inférieure.

Enfin, lorsque le doigt 26' coulisse dans la partie en arc de cercle, la came n'a aucune influence sur le capot inférieur.

Par ailleurs, lors de la fermeture du capot inférieur 4, chaque levier 20 poursuit son mouvement rotatif. La partie mobile 23" de chaque bielle coulisse alors par rapport à sa partie fixe 23'.

Si le levier 20 et la bielle 23 d'un moyen de commande étaient sensiblement alignés l'un derrière l'autre en positon ouverte, ils sont au contraire superposés en position fermée, la partie fixe 23' de la bielle 23 étant agencée dans le levier 20. La partie mobile 23'' en forme de C de chaque bielle 23 entoure alors avantageusement l' arbre secondaire 28 auquel elle est reliée.

Le marchepied est à partir de cet instant en position fermée.

On remarque qu'un unique moyen d'entraînement 18 a permis d'une part de replier les marches inférieure 16 et supérieure 17 du marchepied et, d'autre part de déplacer les capots inférieur 4 et supérieur 3 pour obturer le logement 2. La polyvalence du moyen d'entraînement, du fait des cinématiques mises en oeuvres, permet de limiter le nombre de moteurs nécessaires au repliage/dépliage du marchepied ce qui occasionne des économies financières et un gain de place non négligeable.

En effet, on ne peut que constater un encombrement du marchepied 10 extrêmement limité ce qui garantit son installation dans une barque 5 d'un giravion 1, en évitant au maximum que le marchepied 10 saille du profil en quart de coque de la barque.

Par ailleurs, on comprend bien que l'opération de dépliage consistant à faire passer le marchepied 10 d'une position fermée, conformément à la figure 4 à une position ouverte, représentée sur la figure 2, met en oeuvre les mêmes éléments du marchepied 10. Le moyen d'entraînement 18 tourne cependant dans le sens senestrorsum pour obtenir le résultat souhaité.

En outre, le marchepied doit être verrouillé en position ouverte ainsi qu'en position fermée pour éviter un repliage ou un dépliage indu du marchepied.

En référence à la figure 5, lorsqu'un utilisateur exerce un effort sur une marche, les poutres latérales gauche 14 et droite 15 tendent à se replier en se déplaçant selon les flèches F2.

Un tel déplacement générerait un mouvement des bielles 23. Or, les leviers 20 interdisent ce mouvement dans la mesure où ils sont chacun bloqués par une troisième butée 40 contre laquelle est maintenu ledit levier 20 lorsque le marchepied 10 est déplié, donc en positon ouverte.

Il est d'ailleurs envisageable de pourvoir l'arbre secondaire 28 d'un ressort de rappel tendant à maintenir chaque levier 20 d'un moyen de commande 21, 22 contre une troisième butée 40, à savoir une troisième butée 40 gauche pour le levier gauche du moyen de commande gauche 21 et une troisième butée 40 droite pour le levier droit du moyen de commande droit 22.

En position ouverte, le marchepied 10 est donc parfaitement verrouillé.

On rappelle que la marche inférieure 16 est aussi particulièrement stable. En effet, un angle prédéterminé est maintenu entre la marche inférieure 16 et les poutres latérales 14, 15 en position ouverte.

Lorsqu'un utilisateur appuie sur la marche inférieure 16, ses déports 16" sont bloqués par des premières butées 41 pour empêcher un déplacement de la marche inférieure 16.

De même, les poutres latérales 14, 15 étant maintenues en position ouverte, la marche supérieure 17 est nécessairement stable.

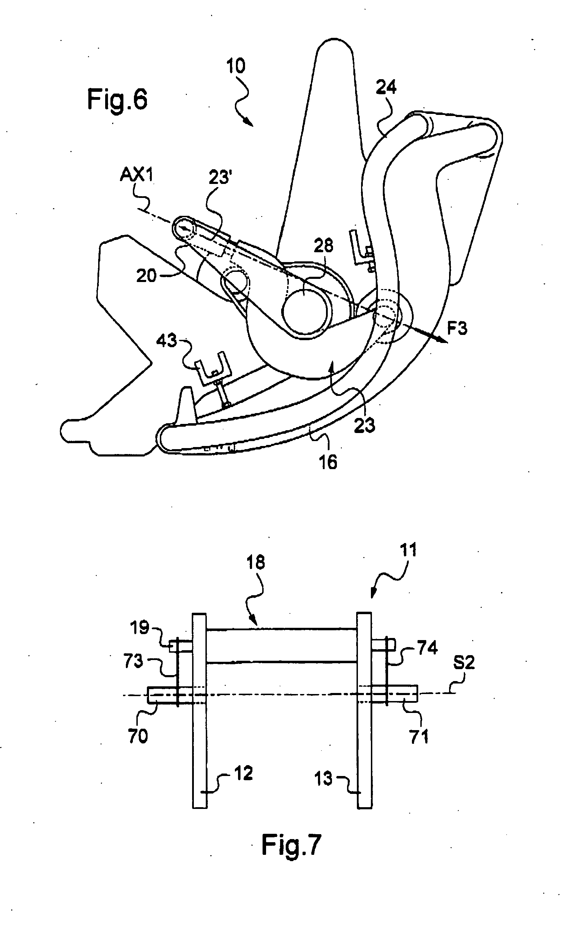

En référence à la figure 6, il convient de s'assurer que le marchepied 10 est aussi verrouillé en position fermée pour éviter une ouverture intempestive de ce marchepied.

En position fermée, chaque poutre latérale doit rester bloquée contre une deuxième butée 43.

Dans cette position, l'axe de rappel AX1 de chaque moyen de commande 21, 22 passe au dessus de l' arbre secondaire 28, alors que la partie mobile 23" de chaque bielle entoure cet arbre secondaire 28.

Ainsi, si des efforts F3 tendent à ouvrir le marchepied 10, ces efforts ne pourront pas déployer les moyens de commande, et donc les poutres latérales ainsi que les capots, dans la mesure où ils sont verrouillés mécaniquement de par leur agencement en position fermée.

De même, la marche inférieure 16 ne peut pas se déplier puisqu'elle est bloquée par les tiges 24, 25, la marche supérieure 17 étant maintenue en position par les poutres latérales.

Le marchepied est donc stable aussi bien en position ouverte qu'en positon fermée, et peut donc être utilisé dans des conditions extrêmes sur un giravion 1.

La figure 7 présente une vue schématique d'un arbre secondaire selon un deuxième mode de réalisation.

En effet, l'arbre secondaire est désormais scindé en deux parties distinctes. Ainsi, l'arbre secondaire comporte un arbre secondaire gauche 70 articulé sur la branche gauche 12 du support fixe 11 et un arbre secondaire droit 71 articulé sur la branche droite 13 de ce support fixe 11.

De plus, l'arbre primaire 19 traverse le moyen d'entraînement 18. Par suite, la zone extrémale gauche de l'arbre primaire 18 est reliée à l'arbre secondaire gauche 70 via une courroie 73, alors que la zone extrémale droite de cet arbre primaire 18 est relié à l'arbre secondaire droit 71 via une autre courroie 74.

Le moyen d'entraînement 18 peut ainsi mettre en rotation les arbres secondaires gauche 70 et droit 71 autour de leur axe secondaire longitudinal de symétrie S2.

Une variante de ce deuxième mode de réalisation peut consister en l'utilisation deux moyens d'entrainement distincts fonctionnant simultanément pour respectivement entrainer les arbres secondaires gauche 70 et droit 71.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Il est en outre envisageable de prévoir au moins un ressort de maintien tendant à supporter le poids du capot inférieur 4, chaque ressort de rappel étant à la fois solidarisé au capot inférieur 4 et au support fixe 10.

De même, le moyen d'entraînement peut être un moteur débrayable, afin de permettre une ouverture manuelle si nécessaire, ou encore un moyen d'entraînement manuel.

Enfin, les figures décrivent un marchepied de giravion. Toutefois, l'invention pourrait s'appliquer à d'autres véhicules, un aéronef, un véhicule terrestre, un véhicule maritime par exemple.

## Revendications

1. Marchepied (10) repliable d'un véhicule muni d'une marche inférieure (16) et d'un support fixe (11) qui est solidarisé à la structure du véhicule (2),
comportant une seule poutre latérale gauche (14) et une seule poutre latérale droite (15) articulées sur ledit support fixe (11), ladite marche inférieure (16) étant agencée sur une extrémité libre gauche (14') et une extrémité libre droite (15') respectivement des poutres latérales gauche (14) et droite (15) via un axe de rotation (16'), un moyen d'entraînement (18) dudit marchepied (10) lié par au moins un moyen de commande (21, 22) à au moins une poutre latérale (14, 15) permettant de rentrer et de sortir ledit marchepied (10) d'un logement (2) ménagé dans ledit véhicule (1) **caractérisé en ce que** qu'il comporte une marche supérieure (17), une partie arrière (17') de ladite marche supérieure (17) étant fixée sur ledit support fixe (11) alors qu'une partie avant (17") de ladite marche supérieure (17) est agencée contre les poutres latérales gauche (14) et droite (15).

2. Marchepied selon la revendication 1,
**caractérisé en ce que** ledit au moins un moyen de commande est pourvu d'un moyen de commande gauche (21) et d'un moyen de commande droit (22), le moyen de commande gauche (21) étant articulé sur le support fixe (11) et la poutre latérale gauche (14) alors que le moyen de commande droit (22) est articulé sur le support fixe (11) et la poutre latérale droite (15).

3. Marchepied selon l'une quelconque des revendications précédentes,
**caractérisé en ce que** ledit support fixe (11) est muni d'une branche gauche (12) et d'une branche droite (13) sur lesquelles sont respectivement articulées les poutres latérales gauche (14) et droite (15).

4. Marchepied selon l'une quelconque des revendications précédentes,
**caractérisé en ce qu'**il comporte au moins une tige (24, 25) articulée d'une part sur ladite marche inférieure (16) et d'autre part sur une portion supérieure (11') dudit support fixe (11).

5. Marchepied selon la revendication 4,
**caractérisé en ce que** ladite tige (24,25) est articulée sur un déport (16") de ladite marche inférieure (16), ce déport (16") étant en amont d'un axe de rotation (16') de la marche inférieure (16), un utilisateur posant son pied en aval de cet axe de rotation (16) en montant dans le véhicule (1).

6. Marchepied l'une quelconque des revendications précédentes,
**caractérisé en ce que** ladite marche supérieure (17) est pourvue d'une rainure latérale gauche (29) et d'une rainure latérale droite (29') qui coopèrent respectivement avec un pion d'ancrage gauche solidarisé à la poutre latérale gauche (14) et avec un pion d'ancrage droit solidarisé à la poutre latérale droite (15).

7. Marchepied selon l'une quelconque des revendications précédentes,
**caractérisé en ce que** ledit moyen d'entraînement (18) comporte un arbre primaire (19) de sortie qui met en rotation, via un lien (50), au moins un arbre secondaire (28, 70, 71) solidarisé à au moins un moyen de commande (21, 22).

8. Marchepied selon la revendication 7,
**caractérisé en ce que** ledit marchepied comporte un unique arbre secondaire (28) qui traverse le support fixe (11) tout en restant apte à effectuer un mouvement rotatif autour de son axe secondaire longitudinal de symétrie (S2).

9. Marchepied selon la revendication 7,
**caractérisé en ce que** ledit arbre secondaire est scindé en deux parties distinctes, plus précisément un arbre secondaire gauche (70) et un arbre secondaire droit (71), chaque arbre secondaire étant agencé sur le support fixe en restant apte à effectuer un mouvement rotatif autour de son axe secondaire longitudinale de symétrie (S2).

10. Marchepied selon la revendication 9,
**caractérisé en ce que**, ledit marchepied comportant un moyen de commande gauche (21) et droit (22), le moyen de commande gauche (21) est articulé sur le support fixe (11) en étant solidarisé sur l'arbre secondaire gauche (70), alors que le moyen de commande droit (22) est lui articulé sur le support fixe (11) en étant solidarisé sur l'arbre secondaire droit (71).

11. Marchepied selon l'une quelconque des revendications précédentes,
**caractérisé en ce que** chaque moyen de commande (21, 22) comporte un levier (20) et une bielle (23), ledit levier (20) étant solidarisé au dit arbre secondaire (28, 70, 71) et sur ladite bielle (23), cette bielle (23) étant articulée sur ledit levier (20) et sur une poutre latérale (14, 15).

12. Marchepied selon la revendication 11,
**caractérisé en ce que** ladite bielle (23) comporte une partie mobile (23") qui coulisse sur une partie fixe (23') de cette bielle (23), ladite partie mobile (23") étant solidarisée à une poutre latérale (14, 15) alors que la partie fixe (23') est articulé sur le levier (20) du moyen de commande (21, 22).

13. Marchepied selon la revendication 12,
**caractérisé en ce que** ladite partie mobile (23") a une forme de C, cette partie fixe (23') entourant ledit arbre secondaire (28, 70, 71) en position fermée.

14. Marchepied selon l'une quelconque des revendications précédentes,
**caractérisé en ce qu'**au moins une poutre latérale (14, 15) comporte une première butée (41) pour bloquer ladite marche inférieure (16) selon un angle prédéterminé lorsque ledit marchepied (10) est déplié.

15. Marchepied selon l'une quelconque des revendications précédentes,
**caractérisé en ce que** ledit support fixe (11) comporte au moins une deuxième butée (43) pour bloquer une poutre latérale (14, 15) lorsque ledit marchepied (10) est replié.

16. Marchepied selon l'une quelconque des revendications précédentes,
**caractérisé en ce que** ledit support fixe (11) comporte au moins une troisième butée (40) pour bloquer un moyen de commande (21) lorsque ledit marchepied (10) est déplié.

17. Marchepied selon l'une quelconque des revendications précédentes,
**caractérisé en ce que**, un levier (20) étant solidarisé à un arbre secondaire (28, 70, 71) afin de pouvoir effectuer un mouvement rotatif autour de l'axe secondaire longitudinal de symétrie (S2) de cet arbre secondaire (28), ledit marchepied (10) est muni d'un ressort de rappel agencé sur ledit arbre secondaire (28, 70, 71) afin de maintenir le moyen de commande (21) en contact avec la deuxième butée (43) quand le marchepied (10) est déplié.

18. Véhicule (1) muni d'une barque (5) dans la zone inférieure de sa structure,
**caractérisé en ce qu'**il comporte un marchepied (10) selon l'une quelconque des revendications précédentes contenu entièrement dans un logement (2) aménagé dans ladite barque (5) lorsque ce marchepied (10) est replié.

19. Véhicule selon la revendication 18,
**caractérisé en ce que**, ledit logement (2) étant obturé en vol par un capot inférieur (4), ledit capot inférieur (4) est mis en mouvement au sol par au moins un premier bras (60) déplacé par une came (26) excentrique afin de permettre le dépliage du marchepied (10), ladite came (26) étant mise en rotation par un arbre secondaire (28) du marchepied (10) entraîné en rotation par un moyen d'entraînement (18).

20. Véhicule selon l'une quelconque des revendications 18 à 19,
**caractérisé en ce que** ledit logement (2) étant obturé en vol par un capot supérieur (3), ledit capot supérieur (3) est mis en mouvement au sol par au moins un deuxième bras (30) articulé sur une marche supérieure (17) du marchepied (10), le déploiement de ladite marche supérieure (17) entraînant un déplacement dudit capot supérieur (3).

21. Véhicule selon l'une quelconque des revendications 19 à 21,
**caractérisé en ce que** ledit véhicule est un giravion muni d'une barque dans la zone inférieure de son fuselage.

## Claims

1. A fold-up set of steps (10) of a vehicle provided with a lower step (16) and a fixed support (11) which is integral with the structure of the vehicle (2),
comprising a single left-hand lateral beam (14) and a single right-hand lateral beam (15) which are articulated on said fixed support (11), said lower step (16) being arranged on a left-hand free end (14') and a right-hand free end (15') of the left-hand (14) and right-hand (15) lateral beams respectively via a rotation spindle (16'), an entraining means (18) of said set of steps (10) linked by at least one control means (21, 22) to at least one lateral beam (14, 15) making it possible to retract and extend said set of steps (10) into/from a housing (2) formed in said vehicle (1), **characterised in that** it comprises an upper step (17), a rear part (17') of said upper step (17) being fixed to said fixed support (11), whereas a front part (17") of said upper step (17) is arranged against the left-hand (14) and right-hand (15) lateral beams.

2. A set of steps according to Claim 1, **characterised in that** said at least one control means is provided with a left-hand control means (21) and a right-hand control means (22), the left-hand control means (21) being articulated to the fixed support (11) and the left-hand lateral beam (14), whereas the right-hand control means (22) is articulated to the fixed support (11) and the right-hand lateral beam (15).

3. A set of steps according to any one of the preceding claims, **characterised in that** said fixed support (11) is provided with a left-hand branch (12) and a right-hand branch (13) on which are articulated the left-hand (14) and right-hand (15) lateral beams respectively.

4. A set of steps according to any one of the preceding claims, **characterised in that** it comprises at least one rod (24, 25) articulated on one hand to said lower step (16) and on the other hand to an upper portion (11') of said fixed support (11).

5. A set of steps according to Claim 4, **characterised in that** said rod (24, 25) is articulated to an offset (16") of said lower step (16), this offset (16") being upstream of a rotation spindle (16') of the lower step (16), a user placing his foot downstream of this rotation spindle (16) when entering the vehicle (1).

6. A set of steps [according to] any one of the preceding claims, **characterised in that** said upper step (17) is provided with a left-hand lateral groove (29) and a right-hand lateral groove (29') which cooperate respectively with a left-hand anchoring pin integral with the left-hand lateral beam (14) and with a right-hand anchoring pin integral with the right-hand lateral beam (15).

7. A set of steps according to any one of the preceding claims, **characterised in that** said entraining means (18) comprises a primary output shaft (19) which, via a link (50), causes at least one secondary shaft (28, 70, 71) integral with at least one control means (21, 22) to rotate.

8. A set of steps according to Claim 7, **characterised in that** said set of steps comprises a single secondary shaft (28) which passes through the fixed support (11) while remaining capable of effecting a rotary movement about its secondary longitudinal axis of symmetry (S2).

9. A set of steps according to Claim 7, **characterised in that** said secondary shaft is split into two separate parts, more precisely a left-hand secondary shaft (70) and a right-hand secondary shaft (71), each secondary shaft being arranged on the fixed support while remaining capable of effecting a rotary movement about its secondary longitudinal axis of symmetry (S2).

10. A set of steps according to Claim 9, **characterised in that**, said set of steps comprising a left-hand (21) and a right-hand (22) control means, the left-hand control means (21) is articulated to the fixed support (11) while being integral with the left-hand secondary shaft (70), whereas the right-hand control means (22) for its part is articulated to the fixed support (11) while being integral with the right-hand secondary shaft (71).

11. A set of steps according to any one of the preceding claims, **characterised in that** each control means (21, 22) comprises a lever (20) and a connecting-rod (23), said lever (20) being integral with said secondary shaft (28, 70, 71) and on said connecting-rod (23), this connecting-rod (23) being articulated on said lever (20) and on a lateral beam (14, 15).

12. A set of steps according to Claim 11, **characterised in that** said connecting-rod (23) comprises a mobile part (23") which slides on a fixed part (23') of this connecting-rod (23), said mobile part (23") being integral with a lateral beam (14, 15), whereas the fixed part (23') is articulated on the lever (20) of the control means (21, 22).

13. A set of steps according to Claim 12, **characterised in that** said mobile part (23") is C-shaped, this fixed part (23') surrounding said secondary shaft (28, 70, 71) in the closed position.

14. A set of steps according to any one of the preceding claims, **characterised in that** at least one lateral beam (14, 15) comprises a first stop (41) for blocking said lower step (16) at a predetermined angle when said set of steps (10) is unfolded.

15. A set of steps according to any one of the preceding claims, **characterised in that** said fixed support (11) comprises at least a second stop (43) for blocking a lateral beam (14, 15) when said set of steps (10) is folded up.

16. A set of steps according to any one of the preceding claims, **characterised in that** said fixed support (11) comprises at least a third stop (40) for blocking a control means (21) when said set of steps (10) is unfolded.

17. A set of steps according to any one of the preceding claims, **characterised in that**, a lever (20) being integral with a secondary shaft (28, 70, 71) in order to be able to effect a rotary movement about the secondary longitudinal axis of symmetry (S2) of this secondary shaft (28), said set of steps (10) is provided with a return spring arranged on said secondary shaft (28, 70, 71) in order to keep the control means (21) in contact with the second stop (43) when the set of steps (10) is unfolded.

18. A vehicle (1) provided with a boat-shaped structure (5) in the lower zone of its structure, **characterised in that** it comprises a set of steps (10) according to any one of the preceding claims which is contained entirely in a housing (2) formed in said boat-shaped structure (5) when this set of steps (10) is folded up.

19. A vehicle according to Claim 18, **characterised in that**, said housing (2) being closed off during flight by a lower cowling (4), said lower cowling (4) is caused to move when on the ground by at least a first arm (60) which is displaced by an eccentric cam (26) in order to permit unfolding of the set of steps (10), said cam (26) being caused to rotate by a secondary shaft (28) of the set of steps (10) driven in rotation by an entraining means (18).

20. A vehicle according to any one of Claims 18 to 19, **characterised in that**, said housing (2) being closed off during flight by an upper cowling (3), said upper cowling (3) is caused to move when on the ground by at least a second arm (30) which is articulated on an upper step (17) of the set of steps (10), the deployment of said upper step (17) involving displacement of said upper cowling (3).

21. A vehicle according to any one of Claims 19 to 21, **characterised in that** said vehicle is a rotorcraft provided with a boat-shaped structure in the lower zone of its fuselage.

## Patentansprüche

1. Einklappbares Trittbrett (10) eines Fahrzeugs mit einer inneren Stufe (16) und einem festen Träger (11), der an dem Aufbau des Fahrzeugs (2) befestigt ist, mit
einem einzigen seitlichen linken Träger (14) und einem einzigen seitlichen rechten Träger (15), die an dem festen Träger (11) angelenkt sind, wobei die innere Stufe (16) an einem linken freien Ende (14') und einem rechten freien Ende (15') der jeweiligen linken (14) und rechten (15) seitlichen Träger über eine Drehachse (16') angelenkt ist, wobei ein Antriebsmittel (18) der Stufe (10), welches über mindestens ein Steuerorgan (21, 22) mit mindestens einem Seitenträger (14, 15) verbunden ist, welches es ermöglicht das Trittbrett (10) aus einer in dem Fahrzeug (1) angeordneten Lagerung (2) ein- und auszufahren,
**gekennzeichnet durch** eine obere Stufe (17), von der ein hinterer Teil (17') an dem festen Träger (11) befestigt ist, während ein vorderer Teil (17" ) der oberen Stufe (17) gegen die linken (14) und rechten (15) Seitenträger anliegend angeordnet ist.

2. Trittbrett nach Anspruch 1,
**dadurch gekennzeichnet, dass** das mindestens eine Steuerorgan mit einem linken Steuerorgan (21) und einem rechten Steuerorgan (22) versehen ist, wobei das linke Steuerorgan (21) am festen Träger (11) angelenkt ist sowie an dem linken Seitenträger (14), während das rechte Steuerorgan (22) an dem festen Träger (11) und dem rechten Seitenträger (15) angelenkt ist.

3. Trittbrett nach einem der vorstehenden Ansprüche,
**dadurch gekennzeichnet, dass** der feste Träger (11) mit einem linken Arm (12) und einem rechten Arm (13) versehen ist, an denen jeweils die rechten und linken Seitenträger (14, 15) angelenkt sind.

4. Trittbrett nach einem der vorstehenden Ansprüche,
**dadurch gekennzeichnet, dass** es mindestens eine Stange (24, 25) aufweist, die einerseits an der inneren Stufe (18) und andererseits an einem oberen Bereich (11') des festen Trägers (11) angelenkt ist.

5. Trittbrett nach Anspruch 4,
**dadurch gekennzeichnet, dass** die Stange (24, 25) an einem Deport (16") der unteren Stufe (16) angelenkt ist, wobei dieser Deport (16") oberhalb einer Drehachse (16') der unteren Stufe (16) angeordnet ist, wobei ein Benutzer seinen Fuß vor diese Drehachse (16) beim Besteigen des Fahrzeugs (1) setzt.

6. Trittbrett nach einem der vorstehenden Ansprüche,
**dadurch gekennzeichnet, dass** die obere Stufe (17) mit einer linken Seitennut (29) und einer rechten Seitennut(29') versehen ist, die jeweils mit einem linken Ankerstift zusammenwirken, der an dem linken Seitenträger (14) befestigt ist und mit einem rechten Ankerstift, der an dem rechten Seitenträger (15) befestigt ist.

7. Trittbrett nach einem der vorstehenden Ansprüche,
**dadurch gekennzeichnet, dass** das Antriebsmittel (18) eine Hauptausgangswelle (19) aufweist, die über eine Verbindung (50) mindestens eine zweite Welle (28, 70, 71) zu einer Drehbewegung antreibt, die mit mindestens einem Steuerorgan (21, 22) verbunden ist.

8. Trittbrett nach Anspruch 7,
**dadurch gekennzeichnet, dass** das Trittbrett eine einzige zweite Welle (28) aufweist, die den festen Träger (11) durchquert, wobei sie in der Lage bleibt eine Drehbewegung um ihre sekundäre Längssymmetrieachse (S2) durchzuführen.

9. Trittbrett nach Anspruch 7,
**dadurch gekennzeichnet, dass** die zweite Achse in zwei unterschiedliche Teile aufgeteilt ist, genauer gesagt eine linke zweite Welle (70) und eine rechte zweite Welle (71), wobei jede zweite Welle auf dem festen Träger angeordnet ist und in der Lage bleibt eine Drehbewegung um ihre sekundäre Längssymmetrieachse (S2) durchzuführen.

10. Trittbrett nach Anspruch 9,
**dadurch gekennzeichnet, dass** das Trittbrett ein linkes Steuerorgan (21) und ein rechtes Steuerorgan (22) aufweist, wobei das linke Steuerorgan (21) an dem festen Träger (11) angelenkt ist und an der linken zweiten Welle (70) befestigt ist, während das rechte Steuerorgan (22) an dem festen Träger (11) angelenkt ist und an der rechten zweiten Welle (71) befestigt ist.

11. Trittbrett nach einem der vorstehenden Ansprüche,
**dadurch gekennzeichnet, dass** jedes Steuerorgan (21, 22) einen Hebel (20) und einen Pleuel (23) aufweist, wobei der Hebel (20) an der zweiten Welle (28, 70, 71) befestigt ist und an dem Pleuel (23), wobei das Pleuel (23) an dem Hebel (20) und an einem Seitenträger (14, 15) angelenkt ist.

12. Trittbrett nach Anspruch 11,
**dadurch gekennzeichnet, dass** das Pleuel (23) ein mobiles Teil (23") aufweist, welches auf einem festen Teil (23') des Pleuels (23) gleitet, wobei das bewegliche Teil (23") an einem Seitenträger (14, 15) befestigt ist, während das feste Teil (23') an dem Hebel (20) des Steuerorgans (21, 22) angelenkt ist.

13. Trittbrett nach Anspruch 12,
**dadurch gekennzeichnet, dass** das bewegliche Teil (23") die Form eines C aufweist und das feste Teil (23') die zweite Welle (28, 70, 71) in geschlossener Stellung umschließt.

14. Trittbrett nach einem der vorstehenden Ansprüche,
**dadurch gekennzeichnet, dass** mindestens ein Seitenträger (14, 15) einen ersten Anschlag (41) aufweist, um die untere Stufe (16) in einem vorbestimmten Winkel zu blockieren während die Stufe (10) ausgefahren ist.

15. Trittbrett nach einem der vorstehenden Ansprüche,
**dadurch gekennzeichnet, dass** der feste Träger (11) mindestens einen zweiten Anschlag (43) aufweist, um einen Seitenträger (14, 15) zu blockieren, während das Trittbrett (10) eingefahren ist.

16. Trittbrett nach einem der vorstehenden Ansprüche,
**dadurch gekennzeichnet, dass** der feste Träger (11) mindestens einen dritten Anschlag (40) aufweist, um ein Steuerorgan (21) zu blockieren, während das Trittbrett (10) ausgefahren ist.

17. Trittbrett nach einem der vorstehenden Ansprüche,
**dadurch gekennzeichnet, dass** ein Hebel (20) an einer zweiten Welle (28, 70, 71) befestigt ist, um eine Drehbewegung um die sekundäre Längssymmetrieachse (S2) dieser zweiten Welle (28) ausführen zu können, wobei das Trittbrett (10) mit einer Rückholfeder versehen ist, die an der zweiten Welle (28, 70, 71) angeordnet ist, um das Steuerorgan (21) in Kontakt mit dem zweiten Anschlag (43) zu halten, während das Trittbrett (10) ausgefahren ist.

18. Fahrzeug (1) mit einem Kiel im unteren Teil seines Aufbaus,
**dadurch gekennzeichnet, dass** es ein Trittbrett (10) gemäß einem der vorstehenden Ansprüche aufweist, welches vollständig in einem Gehäuse (2) untergebracht ist, welches in dem Kiel (5) eingearbeitet ist, während das Trittbrett (10) eingezogen ist.

19. Fahrzeug nach Anspruch 18,
**dadurch gekennzeichnet, dass** das Gehäuse (2) während des Fluges durch einen unteren Deckel (4) abgedeckt ist, wobei der untere Deckel (4) am Boden durch mindestens einen ersten Arm (60) bewegt wird, der durch eine exzentrische Nockenscheibe (26) betätigt wird, um das Auffalten des Trittbretts (10) zu ermöglichen, wobei die Nockenscheibe (26) durch eine zweite Welle (28) des Trittbretts (10) gedreht wird, die durch ein Antriebsmittel (18) in eine Drehbewegung versetzt wird.

20. Fahrzeug nach einem der Ansprüche 18 oder 19,
**dadurch gekennzeichnet, dass** das Gehäuse (2) während des Fluges durch einen oberen Deckel (3) abgedeckt wird, wobei der obere Deckel (3) am Boden durch mindestens eine zweite Welle (30) bewegt wird, die auf einer oberen Stufe (17) des Trittbretts (10) angelenkt ist, wobei das Ausfahren der oberen Stufe (17) eine Bewegung des oberen Deckels (3) bewirkt.

21. Fahrzeug nach einem der Ansprüche 19 oder 20,
**dadurch gekennzeichnet, dass** das Fahrzeug ein Luftfahrzeug ist mit einem Kiel im unteren Bereich seines Rumpfes.
